(19) **Europäisches Patentamt / European Patent Office / Office européen des brevets**

(11) **EP 4 004 374 B1**

(12) **EUROPEAN PATENT SPECIFICATION**

(45) Date of publication and mention of the grant of the patent:
**21.06.2023 Bulletin 2023/25**

(21) Application number: **19748501.4**

(22) Date of filing: **26.07.2019**

(51) International Patent Classification (IPC):
**F04D 15/00** *(2006.01)*  **F04D 15/02** *(2006.01)*
**G01L 9/00** *(2006.01)*  **G01F 23/26** *(2022.01)*

(52) Cooperative Patent Classification (CPC):
**G01L 9/0095; F04D 15/0088; F04D 15/0218;**
**F04D 15/0236; G01F 1/375;** F05D 2270/3011;
F05D 2270/3061; G01F 15/003; G01F 15/005;
G01F 23/263

(86) International application number:
**PCT/EP2019/070151**

(87) International publication number:
**WO 2021/018364 (04.02.2021 Gazette 2021/05)**

(54) **FLUID PUMP**

FLÜSSIGKEITSPUMPE

POMPE À FLUIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.06.2022 Bulletin 2022/22**

(73) Proprietor: **HUSQVARNA AB**
**561 82 Huskvarna (SE)**

(72) Inventors:
• **GUNGL, Johannes**
**89079 Ulm (DE)**

• **MERKLE, Martin**
**89168 Niederstotzingen (DE)**
• **SCHWARZKOPF, Michael**
**89079 Ulm (DE)**

(74) Representative: **Finkele, Rolf et al**
**Gardena Manufacturing GmbH**
**Hans-Lorenser-Straße 40**
**89079 Ulm (DE)**

(56) References cited:
**EP-A1- 3 456 973    US-A1- 2011 110 792**

## Description

### TECHNICAL FIELD

The present disclosure relates to a fluid pump, and more particularly to an operational aspect of the fluid pump.

### BACKGROUND

Generally, a fluid pump used for pumping a fluid may include an automatic operation mode. In many situations, the fluid pump may include electromechanical sensors to detect various operational parameters of the fluid pump for the automatic operation mode of the fluid pump. For example, the fluid pump may include a flow meter to detect a flow rate of the fluid pump, a pressure switch to detect a pressure of the fluid pump, and the like.

However, such electromechanical sensors include moving components which may have a limited working life, in turn, reducing product reliability. Also, due to the moving components, the electromechanical sensors may add substantial bulk to the fluid pump, in turn, increasing footprint and limiting portability. Additionally, the electromechanical sensors may be sensitive to pollution, such as debris, suspended particles, and the like, in the fluid, thus, reducing flexibility and usability.

An example is provided by U.S. patent application publication 2011/0110792A1 which discloses a capacitive sensor. A sensor housing defines a first cavity and a second cavity connected to the first cavity by a bridging member. A capacitor has a first electrode and a second electrode provided within the first and second cavities of the sensor housing. A dielectric connects the first and second electrodes to form a capacitor having a detectable capacitance. The dielectric has a first part made of an insulative material and a second part made of a fluid having a level that changes with respect to the insulative material which causes a change in the capacitance of the capacitor.

Hence, there is a need for an improved fluid pump for such applications.

### SUMMARY

In view of the above, it is an objective of the present invention to solve or at least reduce the drawbacks discussed above. The objective is at least partially achieved by a fluid pump, according to an embodiment of the present invention. The fluid pump includes a fluid inlet. The fluid pump includes a fluid channel fluidly coupled to the fluid inlet. The fluid pump includes a motor configured to pump a fluid through the fluid inlet to the fluid channel. The fluid pump includes a fluid outlet fluidly coupled to the fluid channel. The fluid pump includes a pair of electrodes having a first electrode and a second electrode. The fluid pump includes a current sensor configured to generate a first signal indicative of current being supplied to the motor. The fluid pump also includes a capacitance sensor configured to generate a second signal indicative of capacitance between the pair of electrodes. The fluid pump is configured to monitor the first signal and the second signal. The fluid pump is also configured to be controlled based on at least one of the first signal and the second signal. The capacitance sensor includes a monitoring chamber fluidly coupled to the fluid channel. The monitoring chamber is at least partially filled with gas. The monitoring chamber allows the gas to be at least partially displaced by the fluid flowing into the monitoring chamber from the fluid channel based on an operational mode of the fluid pump. The pair of electrodes is associated with the monitoring chamber. The second signal between the pair of electrodes is indicative of a fluid pressure within the fluid channel. As such, the fluid pump is able to decide on the operational mode based on complete electronic sensing and processing and without the need to use any mechanical moving components, in turn, reducing moving components and eliminating sensitivity issues of moving components, such as a flow meter, to pollution present in the fluid. In the context of the present disclosure the term gas also refers to air and the term fluid may refer to both a liquid or a gaseous media.

According to an embodiment of the present invention, the capacitance sensor further includes a diaphragm fluidly coupled to the fluid channel. The diaphragm is adapted to move within the monitoring chamber based on the fluid pressure within the diaphragm, and more specifically, on one side of the diaphragm. As such, the diaphragm provides a fluid tight separation between the fluid present in the fluid channel and the gas present in the monitoring chamber, in turn, limiting leakage of the fluid from the monitoring chamber.

According to an embodiment of the present invention, the monitoring chamber has a substantially cylindrical configuration. As such, the cylindrical configuration might provide extension of the diaphragm into the monitoring chamber.

According to an embodiment of the present invention, the capacitance sensor further includes a monitoring chamber fluidly coupled to the fluid channel. In an advantageous embodiment one end of the monitoring chamber has a substantially spherical configuration that receives the gas displaced by the diaphragm due to the fluid pressure . As such, the extension chamber reduces buildup of gas pressure within the monitoring chamber outside the diaphragm and thus easies extension of the diaphragm and entry of the fluid into the monitoring chamber.

According to an embodiment of the present invention, the first signal is indicative of a flow of fluid through the fluid channel. As such, the current sensor provides to eliminate moving components, such as the flow meter, in order to recognize the flow of fluid, in turn, reducing sensitivity of the fluid pump to pollution in the fluid.

According to an embodiment of the present invention, the fluid pump further includes a controller communicably coupled to each of the current sensor and the capacitance sensor. The controller is configured to receive the first signal from the current sensor. The controller is configured to receive the second signal from the capacitance sensor. The controller is configured to recognize the flow of fluid through the fluid channel based on the received first signal. The controller is also configured to recognize the fluid pressure within the fluid channel based on the received second signal. The controller is further configured to decide on an operational mode of the fluid pump based on the recognized flow of fluid and the recognized fluid pressure. As such, each of the controller, the current sensor, and the capacitance sensor provides complete electronic determination of the operational mode of the fluid pump without the need to use any mechanical moving components, in turn, reducing system cost and increasing reliability.

According to an embodiment of the present invention, the fluid pump includes a conversion module communicably coupled to the capacitance sensor. The conversion module is configured to receive the second signal from the capacitance sensor. The conversion module is also configured to convert the second signal to a first frequency signal. In a further embodiment the fluid pump also includes a frequency counter communicably coupled to the conversion module. The frequency counter is configured to receive the first frequency signal from the conversion module. The frequency counter is also configured to count a number of first frequency signals. The frequency counter is further configured to generate a second frequency signal indicative of the number of first frequency signals. It might also be possible that the fluid pump further includes a controller communicably coupled to the frequency counter. The controller is configured to receive the second frequency signal from the frequency counter. The controller is also configured to recognize the fluid pressure within the fluid channel based on the received signal. The controller is further configured to decide on the operational mode of the fluid pump based on the recognized flow of fluid and the recognized fluid pressure. As such, each of the controller, the current sensor, the capacitance sensor, the conversion module, and the frequency counter provide complete electronic determination of the operational mode of the fluid pump without the need to use any mechanical moving components, in turn, reducing system cost and increasing reliability.

According to an embodiment of the present invention, recognition of an ambient pressure within the monitoring chamber is indicative of one of a dry run mode and a storage mode of the fluid pump. In an embodiment the recognition of a non-zero first signal is indicative of the dry run mode of the fluid pump. One realization of the invention might be such, that the recognition of a first signal that is zero is indicative of the storage mode of the fluid pump. As such, the fluid pump provides complete electronic determination of the operational mode of the fluid pump without the need to use any mechanical moving components, in turn, reducing system cost, bulk, and complexity, and increasing reliability.

According to an embodiment of the present invention, recognition of a first pressure within the monitoring chamber is indicative of a low pressure mode of the fluid pump, such that the first pressure is higher relative to the ambient pressure and lower relative to a switch-on pressure. As such, the fluid pump provides complete electronic determination of the operational mode of the fluid pump without the need to use any mechanical moving components, in turn, reducing system cost, bulk, and complexity, and increasing reliability.

According to an embodiment of the present invention, recognition of a second pressure within the monitoring chamber is indicative of a high pressure mode of the fluid pump, such that the second pressure is higher relative to the first pressure and higher relative to a switch-on pressure. As such, the fluid pump provides complete electronic determination of the operational mode of the fluid pump without the need to use any mechanical moving components, in turn, reducing system cost, bulk, and complexity, and increasing reliability.

According to an embodiment of the present invention, recognition of a third pressure within the monitoring chamber is indicative of a fluid stop mode of the fluid pump, such that the third pressure is higher relative to each of the second pressure and a switch-on pressure. This might be the case when the flow of fluid is prevented, such as by the closed valve at the fluid outlet (for example a closed tap). In this case no fluid flow is present within the fluid channel. In one embodiment the motor of the fluid pump stops working. As such, the fluid pump provides complete electronic determination of the operational mode of the fluid pump without the need to use any mechanical moving components, in turn, reducing system cost, bulk, and complexity, and increasing reliability

According to an embodiment of the present invention, recognition of a level of fluid within the monitoring chamber approximately equal to a height of the monitoring chamber is indicative of an error mode of the fluid pump. As such, the error mode provides an indication to a user to correctly orient and/or align the fluid pump and/or to completely drain out the fluid from the fluid pump before restarting the operation of the fluid pump.

According to an embodiment of the present invention, the fluid pump further includes a pressure indicator. The pressure indicator is configured to provide a visual indication of a magnitude of the fluid pressure within the fluid channel. As such, the pressure indicator provides a real-time indication of the fluid pressure to the user, in turn, improving product usability and operability.

According to an embodiment of the present invention, the magnitude of the fluid pressure within the fluid channel is transmitted to a mobile device. As such, the fluid pump may provide remote operation and/or monitoring of the fluid pump, in turn, improving product usability and operability.

According to an advantageous embodiment the first signal indicative of a current being supplied to the motor is automatically determined during a teaching cycle where the user of the pump teaches the values of modes Mode I and Mode II by free flow of the fluid through fluid channel and by restricting this flow by closing a valve at the fluid outlet. The manufacturing of the motor and/or pump could lead to a variation of the current that has to be supplied to the motor with the different modes. Thus by automatic determination of the values associated with the first signal instead of making use of a fixed factory set up cares for manufacturing variances or for the use of different motors in general.

In one embodiment the pair of electrodes extend into the fluid channel. By this it is possible to detect fluid within the fluid channel even in case of the storage mode where the monitoring chamber might be free of fluid. This improves the frost warning capabilities of the pump. In addition it also helps to improve the quality of dry run detection as it becomes possible to detect the absence of a fluid within the fluid channel.

Other features and aspects of this invention will be apparent from the following description and the accompanying drawings.

BRIEF DESCRIPTION OF THE DRAWINGS

The invention will be described in more detail with reference to the enclosed drawings, wherein:

    **FIG. 1** shows a schematic representation of a fluid pump, in accordance with an embodiment of the present invention;

    **FIGS. 2A, 2B** and **2C** show different schematic representations of a capacitance sensor of the fluid pump of **FIG. 1,** in accordance with an embodiment of the present invention;

    **FIG. 3** shows a schematic representation of a pump control system of the fluid pump of **FIG. 1,** in accordance with an embodiment of the present invention;

    **FIG. 4** shows a graphical representation of a current drawn by the fluid pump against a flow of fluid through the fluid pump based on time for the fluid pump of **FIG. 1,** in accordance with an embodiment of the present invention;

    **FIG. 5** shows another schematic representation of the pump control system of the fluid pump of **FIG. 1,** in accordance with another embodiment of the present invention; and

    **FIGS. 6A, 6B, 6C, 6D** and **6E** show different schematic representations of different operational modes of the fluid pump, in accordance with embodiments of the present invention.

DESCRIPTION OF EMBODIMENTS

The present invention will be described more fully hereinafter with reference to the accompanying drawings, in which example embodiments of the invention incorporating one or more aspects of the present invention are shown. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "parallel", "inclined", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

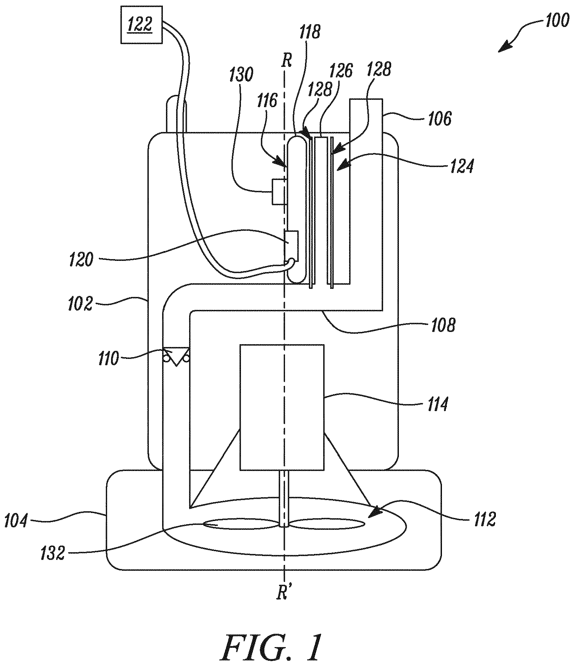

Referring to **FIG. 1,** a schematic representation of a fluid pump **100** is illustrated. The fluid pump **100** will be hereinafter interchangeably referred to as the "pump **100**". The pump **100** is adapted to provide a flow of fluid, such as water, at a predetermined pressure and/or flow rate. The pump **100** may be any fluid pump, such as a positive displacement type pump, a centrifugal type pump, a submersible type pump, and the like.

The pump **100** includes a housing **102**. The housing **102** is adapted to enclose one or more components of the pump **100**. The pump **100** includes a fluid inlet **104** provided in the housing **102**. The fluid inlet **104** is adapted to receive the flow of fluid into the pump **100**. The pump **100** also includes a fluid outlet **106** provided in the housing **102**. The fluid outlet **106** is adapted to allow the flow of fluid to exit the pump **100** at the predetermined pressure and/or flow rate. The pump **100** further includes a fluid channel **108** provided in the housing **102**. The fluid channel **108** is fluidly coupled to each of the fluid inlet **104** and the fluid outlet **106**. The fluid channel **108** is adapted to provide a passage for the flow of fluid from the fluid inlet **104** to the fluid outlet **106**.

The pump **100** includes a flow valve **110** provided in the housing **102**. In the illustrated embodiment, the flow valve **110** is disposed in the fluid channel **108**. The flow valve **110** is adapted to allow the flow of fluid from the fluid inlet **104** into the fluid channel **108** and prevent a reverse flow of fluid from the fluid channel **108** into the fluid inlet **104**. The flow valve **110** may be any check valve used for directional flow control applications. In other embodiments, the flow valve **110** may be alternatively disposed in the fluid inlet **104**.

In the depicted exemplary schematic representation the pump **100** includes a pump wheel **112** disposed in the housing **102**. The pump wheel **112** may include a number of blades or vanes **132**. The pump wheel **112** is disposed in association with the fluid inlet **104**. The pump wheel **112** and the vanes **132** are adapted to rotate about a rotational axis **R-R'** of the pump **100**. Accordingly, the pump wheel **112** and the vanes **132** are adapted to draw the flow of fluid into the fluid channel **108** via the fluid inlet **104**, based on the rotation of the pump wheel **112** and the vanes **132**. The pump **100** also includes a motor **114** disposed in the housing **102**. The motor **114** is operably coupled to the pump wheel **112**. The motor **114** is configured to rotate the pump wheel **112** and the vanes **132** in order to draw the flow of fluid into the fluid channel **108**.

The pump **100** also includes a pump control system **116** disposed within the housing **102**. The pump control system **116** will be hereinafter interchangeably referred to as the "system **116**". The system **116** is configured to control the pump **100** and, more specifically, decide on an operational mode of the pump **100** and will be explained in more detail later. In the illustrated embodiment, the system **116** is partially disposed on a Printed Circuit Board Assembly (PCBA) **118** disposed within the housing **102**. In other embodiments, the system **116** may be disposed on any other location/component of the pump **100** fully or in part, based on application requirements.

The system **116** includes a current sensor **120** disposed on the PCBA **118**. The current sensor **120** is communicably coupled to an inlet power source **122**, such as an Alternating Current (AC) power source or a Direct Current (DC) power source. The current sensor **120** may be any current sensor, such as a resistor type current sensor, a transformer type current sensor, a fiber optic type current sensor, a hall effect type current sensor, and the like. The current sensor **120** is configured to generate a first signal indicative of a current being supplied to the motor **114**.

The system **116** also includes a capacitance sensor **124** disposed on the PCBA **118**. More specifically, the capacitance sensor **124** includes a monitoring chamber **126** and a pair of electrodes **128**. It is obvious to the one skilled in the art that one or even both of the pair electrodes **128** could also be components separate to the PCBA **118**. In particular the PCBA **118** could thus even be placed away from the monitor chamber **126**.

The capacitance sensor **124** is configured to generate a second signal indicative of a capacitance between the pair of electrodes **128**. In the illustrated embodiment, the monitoring chamber **126** has a substantially hollow and cylindrical configuration. In other embodiments, the monitoring chamber **126** may have any other hollow configuration, such as spherical, rectangular, and the like.

The monitoring chamber **126** is fluidly coupled to the fluid channel **108**. Accordingly, the monitoring chamber **126** is adapted to receive the fluid pressure from the fluid channel **108**, based on the operational mode of the pump **100**. As such, the monitoring chamber **126** may be partially filled with gas. Also, the monitoring chamber **126** allows the gas to be partially displaced by the fluid flowing into the monitoring chamber **126** from the fluid channel **108** caused by the fluid pressure, based on the operational mode of the pump **100**.

In the depicted exemplary embodiment the pair of electrodes **128** extend into the fluid channel **108**. By this it is possible to detect fluid within the fluid channel **108** even in case of the storage mode where the monitoring chamber **126** might be free of fluid. This improve the frost warning capabilities of the pump **100**. In addition it also helps to improve the quality of dry run detection as it becomes possible to detect the absence of a fluid within the fluid channel **108**.

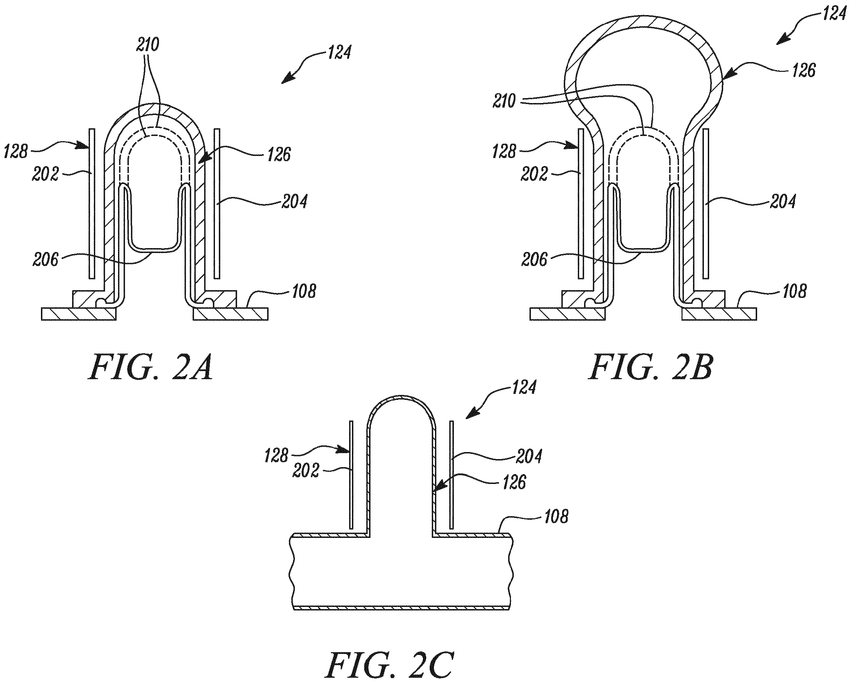

Referring to **FIGS. 2A, 2B** and **2C,** schematic representations of different embodiments of the capacitance sensor **124** are illustrated. Referring to **FIG. 2A,** in one embodiment, the capacitance sensor **124** includes the monitoring chamber **126** fluidly coupled to the fluid channel **108** and disposed substantially perpendicular to the fluid channel **108**. The capacitance sensor **124** also includes the pair of electrodes **128,** such as a first electrode **202** and a second electrode **204**. In the illustrated embodiment, the first electrode **202** and the second electrode **204** are disposed on opposite sides of the monitoring chamber **126** and spaced apart relative to one another. In other embodiments, the first electrode **202** and the second electrode **204** may be disposed on same side of the monitoring chamber **126**.

The capacitance sensor **124** also includes a diaphragm **206** movably disposed in the monitoring chamber **126**. The diaphragm **206** may be made of any flexible material, such as rubber, polymer, and the like. More specifically, the diaphragm **206** is fixedly coupled to one of the fluid channel **108** and the monitoring chamber **126**. Also, the diaphragm **206** is fluidly coupled to the fluid channel **108**. Accordingly, based on the fluid pressure within the fluid channel **108,** the diaphragm **206** is adapted to receive the fluid pressure and extend within the monitoring chamber **126** based on an increasing level and/or pressure of fluid within the diaphragm **206**. More specifically, the fluid enters on one side of the diaphragm **206** in order to extend the diaphragm **206** within the monitoring chamber **126**.

Based on the level of fluid present within the diaphragm **206,** the second signal between the pair of electrodes **128** may change. For example, a mathematical formula for capacitance is defined as:

$$C = (\varepsilon_0 * \varepsilon_r * A)/D$$

Wherein:

$\varepsilon_0$ = Permittivity Constant of Free Space;
$\varepsilon_r$ = Permittivity of fluid;
**A** = Surface Area of the Pair of Electrodes; and
**D** = Distance Between the Pair of Electrodes.

For a given embodiment of the capacitance sensor **124,** the surface area (**A**) of the pair of electrodes **128** and the distance (**D**) between the pair of electrodes **128** may remain constant. However, based on a change of the level of fluid within the monitoring chamber **126,** the capacitance may change based on a changing level of fluid between the pair of electrodes **128**. As such, the permittivity of fluid ($\varepsilon_r$) has an effect on the capacitance between the pair of electrodes **128**. Accordingly, based on the level of fluid present within the diaphragm **206,** the second signal between the pair of electrodes **128** changes and is indicative of the fluid pressure within the fluid channel **108.**

In the illustrated embodiment, as shown in **FIG. 2A,** the diaphragm **206** changes its shape based on the fluid pressure within the fluid channel **108,** The diaphragm **206** may extend (as shown by ghost lines **210**) into the monitoring chamber **126,** in turn, compressing the gas present in the monitoring chamber **126** above the diaphragm **206**. Further, based on a reducing fluid pressure in the fluid channel **108,** the compressed gas within the monitoring chamber **126** may expand, in turn, pushing the diaphragm **206** toward the fluid channel **108** and thus the fluid present in the diaphragm **206** into the fluid channel **108.**

In another illustrated embodiment, as shown in **FIG. 2B,** the capacitance sensor **124** is shown with another embodiment of the monitoring chamber **126**. The monitoring chamber **126** has a bulb-shaped construction or a substantially spherical configuration at its end which eases the fluid to expand in the diaphragm **206.** As such, the monitoring chamber **126** reduces a buildup of gas pressure within the monitoring chamber **126** outside of the diaphragm **206** and thus provides extension of the diaphragm **206** within the monitoring chamber **126** with reduced backpressure on the diaphragm **206**. In the illustrated embodiment, the monitoring chamber **126** has a substantially spherical configuration. In other embodiments, the monitoring chamber **126** may have any other configuration, such as cylindrical.

In yet another illustrated embodiment, as shown in **FIG. 2C,** the capacitance sensor **124** may include the monitoring chamber **126** without the diaphragm **206**. More specifically, in the illustrated embodiment, the diaphragm **206** is omitted. In such a situation, the fluid may directly enter the monitoring chamber **126** from the fluid channel **108** based on the increasing fluid pressure in the fluid channel **108.**

Referring again to **FIG. 1,** the system **116** also includes a controller **130** disposed on the PCBA **118**. The controller **130** may be any control unit configured to perform various functions of the system **116**. In one embodiment, the controller **130** may be a dedicated control unit configured to perform functions related to the system **116**. In another embodiment, the controller **130** may be a Motor Control Unit (MCU) associated with the pump **100,** an Electronic Control Unit (ECU) associated with the pump **100,** and so on configured to perform functions related to the system **116.**

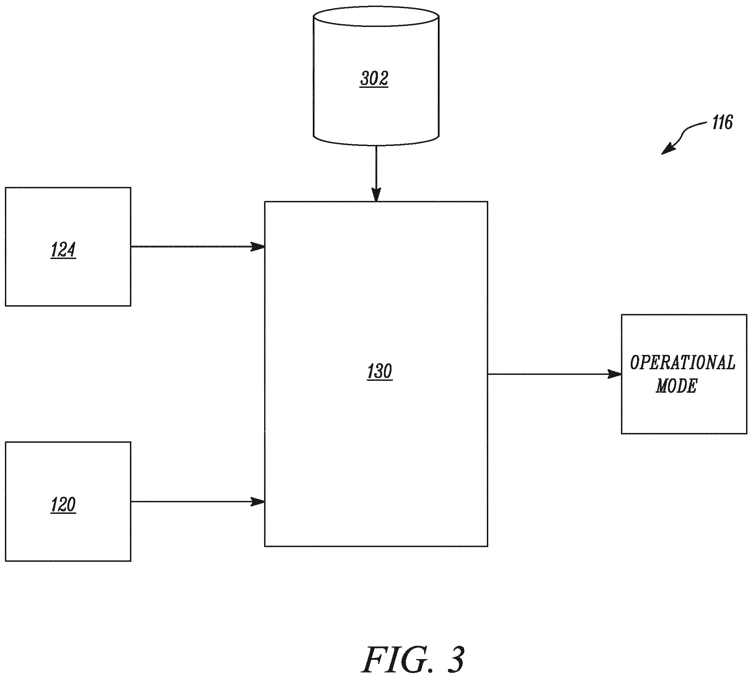

Referring to **FIG. 3,** a schematic representation of one embodiment of the system **116** is illustrated. The system **116** includes the controller **130** communicatively coupled to the capacitance sensor **124**. Accordingly, the controller **130** is configured to receive the second signal from the capacitance sensor **124**. Based on the received second signal, the controller **130** is configured to recognize the fluid pressure within the fluid channel **108**. More specifically, based on the level of fluid in the diaphragm **206** and, thus, in the monitoring chamber **126,** the capacitance sensor **124** may recognize the capacitance between the pair of electrodes **128**. Based on the recognized capacitance, the controller **130** may recognize the fluid pressure within the fluid channel **108.**

In one embodiment, the controller **130** may recognize the fluid pressure based on a dataset (not shown). The dataset may be stored in an internal memory (not shown) of the controller **130** or a database **302** communicably coupled to the controller **130**. The dataset may include various values of the fluid pressure based on varying values of the capacitance between the pair of electrodes **128**. In another embodiment, the controller **130** may recognize the fluid pressure based on a mathematical expression. The mathematical expression may be stored in the internal memory of the controller **130** or the database **302** communicably coupled to the controller **130**. The mathematical expression may include a mathematical relationship between the fluid pressure and the capacitance. In such a situation, the controller **130** may calculate the fluid pressure based on the capacitance using the mathematical expression. In yet another embodiment, the controller **130** may be calibrated to recognize the fluid pressure based on the capacitance using any calibration technique, based on application requirements.

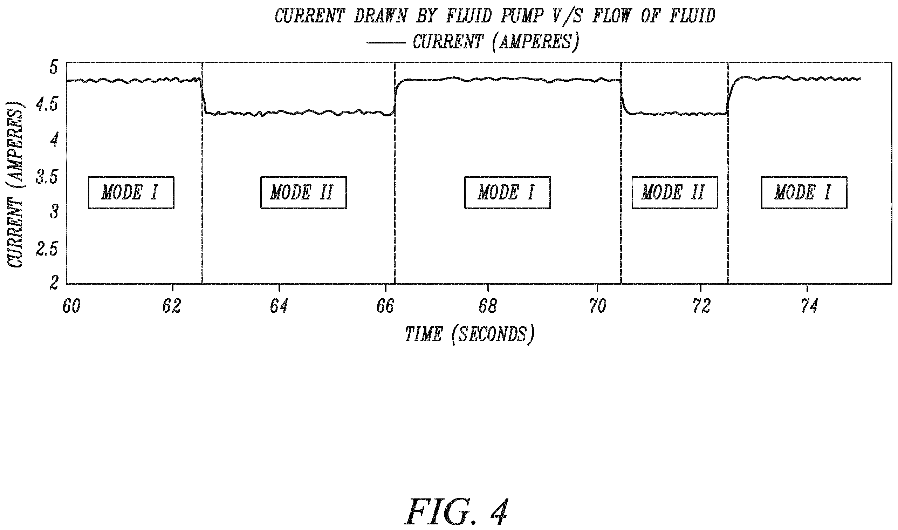

Also, the system **116** includes the current sensor **120** communicatively coupled to the controller **130**. Accordingly, the controller **130** is configured to receive the first signal from the current sensor **120**. Based on the received first signal, the controller **130** is configured to recognize the flow of fluid through the fluid channel **108**. Referring to **FIG. 4,** a graphical representation of the current drawn by the motor **114** against the flow of fluid from the motor **114** based on time is illustrated. In the accompanying figure, a mode **"I"** refers to the current drawn by the motor **114** during the flow of fluid, and a mode **"II"** refers to the current drawn by the motor **114** during pumping against a closed valve, such as a closed water tap (not shown), thus, preventing the flow of fluid.

As shown, the current drawn by the motor **114** in mode **"I"** is higher relative to the current drawn by the motor **114** in mode **"II"**. As such, the first signal is indicative of the flow of fluid through the fluid channel **108**. Accordingly, based on the current drawn by the motor **114,** the controller **130** is configured to recognize the flow of fluid through the fluid channel **108**. Further, the controller **130** is configured to monitor the first signal and the second signal and control the pump **100** based on the received signals. More specifically, the controller **130** is configured to decide on the operational mode of the pump **100** based on the recognized flow of fluid and the recognized fluid pressure. The operational mode of the pump **100** may be a dry run mode, a storage mode, a low pressure mode, a high pressure mode, a fluid stop mode, or an error mode of the pump **100,** and will be explained in more detail later. In one embodiment the first signal indicative of a current being supplied to the motor **114** is automatically determined during a teaching cycle where the user of the pump teaches the values of modes Mode I and Mode II by free flow of the fluid through fluid channel **108** and by restricting this flow by closing a valve at the fluid outlet **106.** For this purpose one could for example equip the pump **100** with a button to initiate and/or indicate the teaching cycle. In an other embodiment there could be a virtual element on a surface generated by software that can be selected and thus activated by a user.

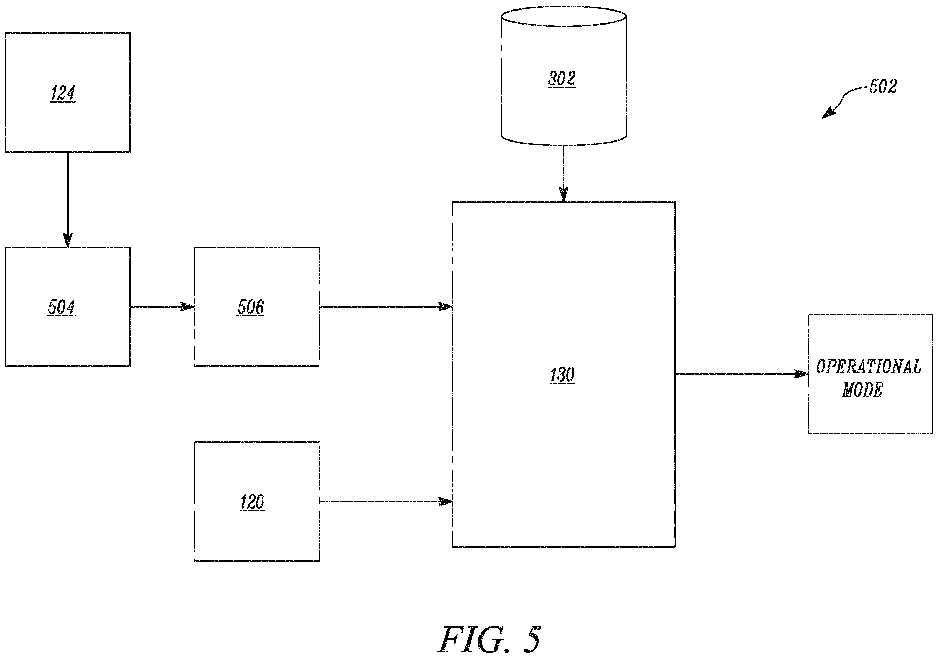

Referring to **FIG. 5,** a schematic representation of another embodiment of the system **502** is illustrated. In the illustrated embodiment, the system **502** includes a conversion module **504** communicably coupled to the capacitance sensor **124.** The conversion module **504** is configured to receive the second signal from the capacitance sensor **124.** Also, the conversion module **504** is configured to convert the second signal to a first frequency signal. The conversion module **504** may be any conversion unit configured to convert a received signal to a frequency signal.

Additionally, the system **502** includes a frequency counter **506** communicably coupled to the conversion module **504.** The frequency counter **506** is configured to receive the first frequency signal from the conversion module **504.** The frequency counter **506** is also configured to count a number of first frequency signals. The frequency counter **506** is further configured to generate a second representing signal indicative of the number of first frequency signals. The frequency counter **506** is further communicably coupled to the controller **130.** The controller **130** is configured to receive the second representing signal from the frequency counter **506.** Based on the received signal, the controller **130** is configured to recognize the fluid pressure within the fluid channel **108.** In one embodiment the second representing signal is a second frequency signal.

In one embodiment, the controller **130** may recognize the fluid pressure based on a dataset (not shown). The dataset may be stored in the internal memory of the controller **130** or the database **302** communicably coupled to the controller **130.** The dataset may include various values of the fluid pressure based on varying values of the second representing signal. In another embodiment, the controller **130** may recognize the fluid pressure based on a mathematical expression. The mathematical expression may be stored in the internal memory of the controller **130** or the database **302** communicably coupled to the controller **130.** The mathematical expression may include a mathematical relationship between the fluid pressure and the second representing signal. In such a situation, the controller **130** may calculate the fluid pressure based on the second representing signal using the mathematical expression. In yet another embodiment, the controller **130** may be calibrated to recognize the fluid pressure based on the second representing signal using any calibration technique, based on application requirements.

The controller **130** is also communicably coupled to the current sensor **120.** Accordingly, based on the current drawn by the motor **114,** the controller **130** is configured to recognize the flow of fluid through the fluid channel **108,** as described with reference to **FIG. 4.** Further, the controller **130** is configured to decide the operational mode of the pump **100** based on the recognized flow of fluid and the recognized fluid pressure.

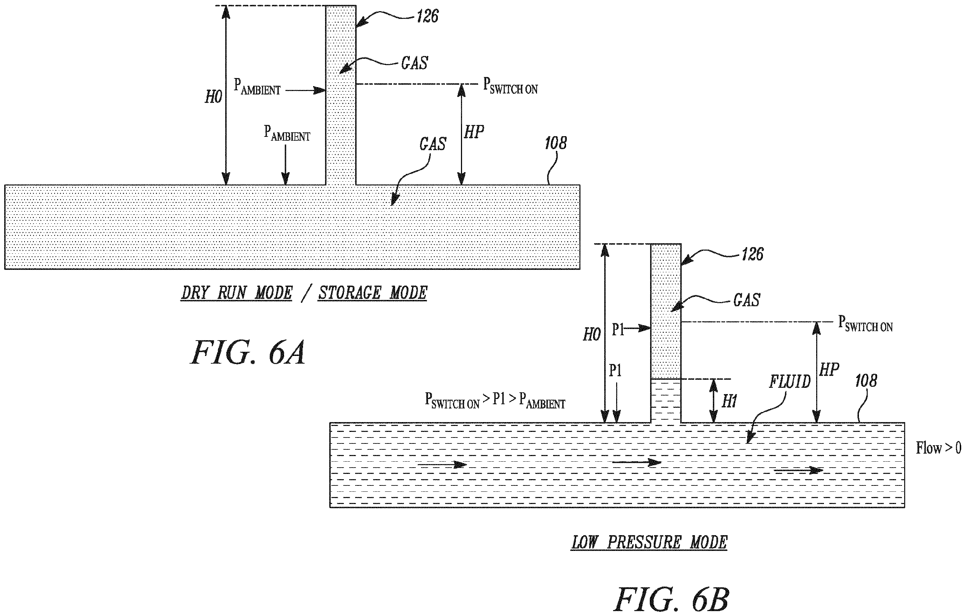

FIGS. 6A-6D schematically show the pump 100 for ease of understanding of the functional principles without the diaphragm 206. Referring to **FIG. 6A,** when the pump **100** is completely drained, the flow of fluid is absent within each of the fluid channel **108** and the monitoring chamber **126.** More specifically, a level of gas present in the monitoring chamber **126** is equal to a height (**H0**) of the monitoring chamber **126.** In such a situation, the controller **130** receives the second signal from the capacitance sensor **124** indicative of an ambient pressure (**P$_{ambient}$**) in the monitoring chamber **126.** Additionally, the controller **130** monitors the first signal from the current sensor **120.**

In a situation when the first signal is non-zero, the first signal is indicative of a switched-on state of the motor **114.** In such a situation, the controller **130** is configured to decide the operational mode as the dry run mode of the pump **100.** Means that the motor 114 is running but the fluid channel **108** is not filled with fluid that could be pumped.

In another situation when the first signal is approximately zero, the first signal is indicative of a switched-off or standby state of the motor **114.** In such a situation, the controller **130** is configured to decide on the operational mode as the storage mode of the pump **100.** Also, it should be noted that a switch-on pressure (**P$_{switchon}$**) indicated in the accompanying drawings is relevant in case of a decrease in the fluid pressure while the pump is switched off and thus results in switching on of the pump **100** and will be explained in more detail later.

In another situation, referring to **FIG. 6B,** when the pump **100** is operational, a flow of fluid is present within the fluid channel **108.** In such a situation, the fluid is also partially present in the monitoring chamber **126.** Accordingly, the controller **130** receives the second signal from the capacitance sensor **124** indicative of a first pressure (**P1**) in the monitoring chamber **126.** The first pressure (**P1**) is the fluid pressure in the fluid channel **108.** Also, the first pressure (**P1**) is higher relative to the ambient pressure (**P$_{ambient}$**) and lower relative to the switch-on pressure (**P$_{switchon}$**). Further, a height (**H1**) of the fluid present in the monitoring chamber **126** is substantially less than each of the height ($H0$) of the monitoring chamber **126** and a height ($HP$) of the fluid associated with the switch-on pressure ($P_{switchon}$). Additionally, the controller **130** monitors the first signal from the current sensor **120**. In a situation when the first signal is indicative of the flow of fluid through the pump **100,** such as in mode **"I",** the controller **130** is configured to decide on the operational mode as being the low pressure mode of the pump **100.**

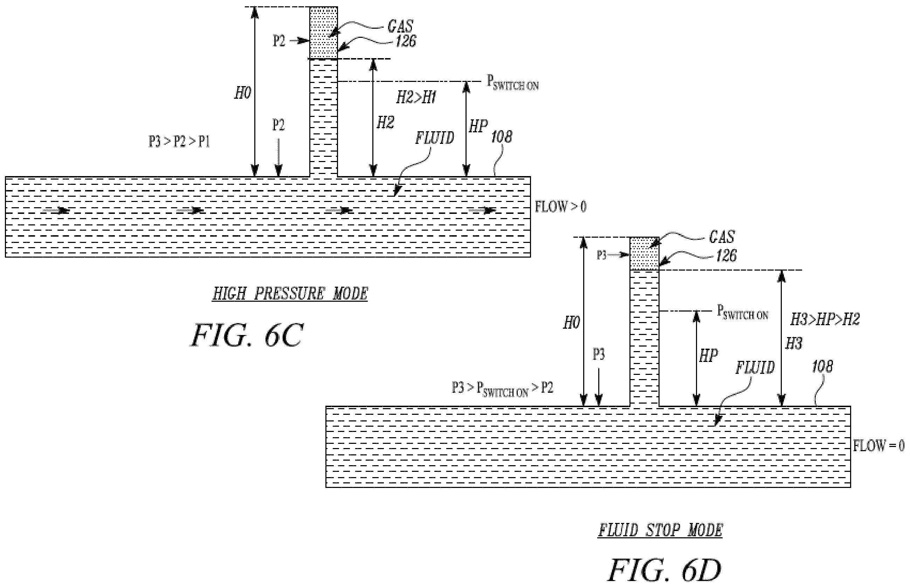

In another situation, referring to **FIG. 6C,** when the pump **100** is operational, the flow of fluid is present within the fluid channel **108**. In such a situation, the fluid is also partially present in the monitoring chamber **126**. Accordingly, the controller **130** receives the second signal from the capacitance sensor **124** indicative of a second pressure ($P2$) in the monitoring chamber **126**. The second pressure ($P2$) is the fluid pressure in the fluid channel **108**. Also, the second pressure ($P2$) is higher relative to the first pressure ($P1$) and higher relative to the switch-on pressure ($P_{switchon}$). Further, a height ($H2$) of the fluid present in the monitoring chamber **126** is lower than the height ($H0$) of the monitoring chamber **126** and greater than the height ($HP$) of the fluid associated with the switch-on pressure ($P_{switchon}$), and greater than the height ($H1$) of the fluid as shown in **FIG. 6B**. Additionally, the controller **130** monitors the first signal from the current sensor **120**. In a situation when the first signal is indicative of the flow of fluid through the pump **100,** such as in mode **"I",** the controller **130** is configured to decide on the operational mode as the high pressure mode of the pump **100.**

In another situation, referring to **FIG. 6D,** when the pump **100** is operational and the flow of fluid prevented, such as by the closed valve at the fluid outlet **106** (for example a closed tap), no fluid flow is present within the fluid channel **108**. In such a situation, the fluid is also present substantially in the monitoring chamber **126** resulting in the pressure ($P3$) of the fluid as such. Accordingly, the controller **130** receives the second signal from the capacitance sensor **124** indicative of a third pressure ($P3$) in the monitoring chamber **126**. The third pressure ($P3$) is approximately equal to the fluid pressure in the fluid channel **108**. Also, the third pressure ($P3$) is higher relative to each of the second pressure ($P2$) and the switch-on pressure ($P_{switchon}$).

Further, a height ($H3$) of the fluid present in the monitoring chamber **126** is less than the height ($H0$) of the monitoring chamber **126** and greater than the height ($HP$) of the fluid associated with the switch-on pressure ($P_{switchon}$). Additionally, the controller **130** monitors the first signal from the current sensor **120**. In a situation when the first signal is indicative of the limited flow of fluid through the pump **100,** such as in mode **"II",** the controller **130** is configured to decide on the operational mode as the fluid stop mode of the pump **100**. Accordingly, in some situations, the controller **130** may automatically switch off the pump **100** in order to prevent over pressurization of the pump **100** or void running of the motor **114,** in turn, preventing system damage. If finally the closed valve at the fluid outlet **106** is reopened the fluid pressure in the fluid channel **108** will drop and thus eventually the height of the fluid within the monitoring chamber **126** gets less than the height HP associated with the switch-on pressure ($P_{switchon}$). In this situation the motor **114** of the pump **100** will be switched on. Thus the pump 100 will pump fluid through channel **108**.

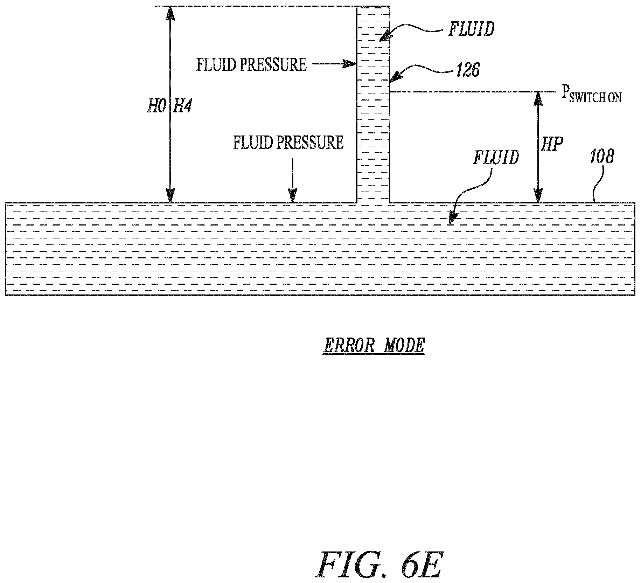

In another situation, referring to **FIG. 6E,** when the pump **100** may be operational or non-operational, and the monitoring chamber **126** is completely filled with the fluid, such that a height ($H4$) of the fluid in the monitoring chamber **126** is equal to the height ($H0$) of the monitoring chamber **126,** the controller **130** receives the second signal from the capacitance sensor **124** indicative of a maximum possible height of fluid in the monitoring chamber **126**. In this case the controller **130** is configured to decide on the operational mode as the error mode of the pump **100.**

It should be noted that the error mode of the pump **100** may be indicative of an incorrect orientation and/or alignment of the pump **100**. For example, in a situation of a partial or complete turnaround of the pump **100,** the fluid may enter the monitoring chamber **126,** thus, completely filling the monitoring chamber **126**. As such, the error mode may be an indication to a user to correctly orient and/or align the pump **100** and/or to completely drain out the fluid from the pump **100** before restarting the operation of the pump **100.**

Additionally, the pump **100** also includes a pressure indicator (not shown). The pressure indicator may be an analogue type or a digital type pressure indicator. In some situations, the pressure indicator may be directly fluidly coupled to the monitoring chamber **126** or the fluid channel **108** in order to display a magnitude of the fluid pressure within the monitoring chamber **126**. In some situations, the pressure indicator may be communicably coupled to the controller **130**. In such a situation, the controller **130** may display the magnitude of the fluid pressure within the monitoring chamber **126** via the pressure indicator. More specifically or alternatively, the controller **130** may recognize the magnitude of the fluid pressure within the monitoring chamber **126** based on the second signal received from the capacitance sensor **124,** as described with reference to **FIGS. 3** and **5,** and display the magnitude of the fluid pressure via the pressure indicator. As such, the pressure indicator may provide a real time visual indication of the magnitude of the fluid pressure within the monitoring chamber **126,** and thus, the fluid channel **108.**

In one embodiment, the controller **130** may recognize the magnitude of the fluid pressure based on a dataset (not shown). The dataset may be stored in an internal memory (not shown) of the controller **130** or the database **302** communicably coupled to the controller **130**. The dataset may include various values of the magnitude of the fluid pressure based on varying values of the second signal. In another embodiment, the controller

130 may recognize the magnitude of the fluid pressure based on a mathematical expression. The mathematical expression may be stored in the internal memory of the controller 130 or the database 302 communicably coupled to the controller 130. The mathematical expression may include a mathematical relationship between the fluid pressure and the second signal. In such a situation, the controller 130 may calculate the magnitude of the fluid pressure based on the second signal using the mathematical expression. In yet another embodiment, the controller 130 may be calibrated to recognize the magnitude of the fluid pressure based on the second signal using any calibration technique, based on application requirements.

Further, in some embodiments, the magnitude of the fluid pressure within the fluid channel 108 may be transmitted to a mobile device (not shown). The mobile device may be any electronic device, such as a smartphone, a tablet, a laptop computer, an electronic diagnostic tool, a handheld electronic device, and the like. More specifically, the controller 130 may be communicably coupled to the mobile device, such as wirelessly or via a wired connection, in order to transmit the magnitude of the fluid pressure to the mobile device. As such, the magnitude of the fluid pressure may be easily accessible to the user remotely, in turn, improving product usability and operability.

The pump 100 provides a simple, efficient, and cost-effective means to automatically decide the different operational modes of the pump 100, in turn, improving user convenience, automation, and operability. The decision of the dry run mode and the fluid stop mode of the pump 100 provides additional protection against component damage and may improve product life. The system 116, 502 includes Surface Mounted Devices (SMDs), such as the current sensor 120, the capacitance sensor 124, the controller 130, and the like, directly mounted on the PCBA 118, in turn, reducing system cost. The pump 100 also eliminates moving components, such as a flow meter, in turn, reducing system bulk, complexity, and sensitivity to pollution in the fluid. Further, the system 116, 502 may be incorporated in any existing pump with little modifications to the existing system, in turn, providing improved compatibility.

In the drawings and specification, there have been disclosed preferred embodiments and examples of the invention and, although specific terms are employed, they are used in a generic and descriptive sense only and not for the purpose of limitation of the scope of the invention being set forth in the following claims.

ELEMENTS

| 100 | Fluid Pump / Pump |
| 102 | Housing |
| 104 | Fluid Inlet |

| 106 | Fluid Outlet |
| 108 | Fluid Channel |
| 110 | Flow Valve |
| 112 | Pump Wheel |
| 114 | Motor |
| 116 | Pump Control System / System |
| 118 | Printed Circuit Board Assembly / PCBA |
| 120 | Current Sensor |
| 122 | Inlet Power Source |
| 124 | Capacitance Sensor |
| 126 | Monitoring Chamber |
| 128 | Pair of Electrodes |
| 130 | Controller |
| 132 | Vane |
| 202 | First Electrode |
| 204 | Second Electrode |
| 206 | Diaphragm |
| 210 | Ghost Line |
| 302 | Database |
| 502 | Pump Control System / System |
| 504 | Conversion Module |
| 506 | Frequency Counter |
| R-R' | Rotational Axis |
| I | Mode |
| II | Mode |
| $P_{ambient}$ | Ambient Pressure |
| $P_{switchon}$ | Switch-on Pressure |
| P1 | First Pressure |
| P2 | Second Pressure |
| P3 | Third Pressure |
| H0 | Height of Monitoring Chamber |
| H1 | Height of Fluid |
| H2 | Height of Fluid |
| H3 | Height of Fluid |
| H4 | Height of Fluid |
| HP | Switch-on Pressure Height |
| SMD | Surface Mounted Device |
| $\varepsilon_0$ | Permittivity Constant of Free Space |
| $\varepsilon_r$ | Permittivity of Fluid |
| A | Surface Area of the Pair of Electrodes |
| D | Distance Between the Pair of Electrodes |

**Claims**

1.   A fluid pump (100) comprising:

a fluid inlet (104);
a fluid channel (108) fluidly coupled to the fluid inlet (104);
a motor (114) configured to pump a fluid through the fluid inlet (104) to the fluid channel (108);
a fluid outlet (106) fluidly coupled to the fluid channel (108);
a pair of electrodes (128) having a first electrode (202) and a second electrode (204);
a current sensor (120) configured to generate a first signal indicative of a current being supplied to the motor (**114**); and

a capacitance sensor (**124**) configured to generate a second signal indicative of a capacitance between the pair of electrodes (**128**),

wherein the fluid pump (**100**) is configured to monitor the first signal and the second signal, and

wherein the fluid pump (**100**) is configured to be controlled based on at least one of the first signal and the second signal,

**<u>characterized in that:</u>**

the capacitance sensor (**124**) includes a monitoring chamber (**126**) fluidly coupled to the fluid channel (**108**), wherein the monitoring chamber (**126**) is at least partially filled with gas, and wherein the monitoring chamber (**126**) is configured to allow the gas to be at least partially displaced by the fluid flowing into the monitoring chamber (**126**) from the fluid channel (**108**) based on an operational mode of the fluid pump (**100**); and

the pair of electrodes (**128**) is associated with the monitoring chamber (**126**), wherein the second signal between the pair of electrodes (**128**) is indicative of a fluid pressure within the fluid channel (**108**).

2. The fluid pump (**100**) of claim 1, wherein the capacitance sensor (**124**) further includes a diaphragm (**206**) fluidly coupled to the fluid channel (**108**), the diaphragm (**206**) adapted to move within the monitoring chamber (**126**) based on the fluid pressure within the diaphragm (**206**).

3. The fluid pump (**100**) of any claim of the preceding ones, wherein the first signal is indicative of a flow of fluid through the fluid channel (**108**).

4. The fluid pump (**100**) of any claim of the preceding ones, further includes a controller (**130**) communicably coupled to each of the current sensor (**120**) and the capacitance sensor (**124**), the controller (**130**) configured to:

receive the first signal from the current sensor (**120**);

receive the second signal from the capacitance sensor (**124**);

recognize the flow of fluid through the fluid channel (**108**) based on the received first signal;

recognize the fluid pressure within the fluid channel (**108**) based on the received second signal; and

decide on an operational mode of the fluid pump (**100**) based on the recognized flow of fluid and the recognized fluid pressure.

5. The fluid pump (**100**) of any claim of the preceding ones, further includes a conversion module (**504**) communicably coupled to the capacitance sensor (**124**), the conversion module (**504**) configured to:

receive the second signal from the capacitance sensor (**124**); and

convert the second signal to a first frequency signal.

6. The fluid pump (**100**) of any claim of the preceding ones, wherein recognition of an ambient pressure ($P_{ambient}$) within the monitoring chamber (**126**) is indicative of one of a dry run mode and a storage mode of the fluid pump (**100**).

7. The fluid pump (**100**) of claim 6, wherein the additional recognition of a non-zero first signal is indicative of the dry run mode of the fluid pump (**100**).

8. The fluid pump (**100**) of claim 6, wherein the additional recognition of a zero first signal is indicative of the storage mode of the fluid pump (**100**).

9. The fluid pump (**100**) of any claim of the preceding ones, wherein recognition of a first pressure ($P1$) within the monitoring chamber (**126**) is indicative of a low pressure mode of the fluid pump (**100**), the first pressure ($P1$) being higher relative to the ambient pressure ($P_{ambient}$) and lower relative to a switch-on pressure ($P_{switchon}$).

10. The fluid pump (**100**) of any claim of the preceding ones, wherein recognition of a second pressure ($P2$) within the monitoring chamber (**126**) is indicative of a high pressure mode of the fluid pump (**100**), with the second pressure ($P2$) being higher relative to the first pressure ($P1$) and higher relative to a switch-on pressure ($P_{switchon}$).

11. The fluid pump (**100**) of any claim of the preceding ones, wherein recognition of a third pressure ($P3$) within the monitoring chamber (**126**) is indicative of a fluid stop mode of the fluid pump (**100**), with the third pressure ($P3$) being higher relative to each of the second pressure (**P2**) and a switch-on pressure ($P_{switchon}$).

12. The fluid pump (**100**) of any claim of the preceding ones, wherein recognition of a level of fluid within the monitoring chamber (**126**) approximately equal to a height ($H0$) of the monitoring chamber (**126**) is indicative of an error mode of the fluid pump (**100**).

13. The fluid pump (**100**) of any claim of the preceding ones, further includes a pressure indicator, the pressure indicator configured to provide a visual indication of a magnitude of the fluid pressure within the fluid channel (**108**), and where preferably the magnitude of the fluid pressure within the fluid channel (**108**) is transmitted to a mobile device.

14. The fluid pump (**100**) of any claim of the preceding ones, wherein the first signal indicative of a current being supplied to the motor (**114**) is automatically determined during a teaching cycle where the user of the pump teaches the values of modes Mode I and Mode II by free flow of the fluid through fluid channel (**108**) and by restricting this flow by closing a valve at the fluid outlet (**106**).

15. The fluid pump (**100**) of any claim of the preceding ones, wherein the pair of electrodes (**128**) extend into the fluid channel (**108**).


**Patentansprüche**

1. Eine Fluidpumpe (100) die Folgendes umfasst:

    einen Fluideinlass (104);
    einen Fluidkanal (108), der mit dem Fluideinlass (104) in Fluidverbindung steht;
    einen Motor (114), der so ausgebildet ist, dass er ein Fluid durch den Fluideinlass (104) zu dem Fluidkanal (108) pumpt;
    einen Fluidauslass (106), der mit dem Fluidkanal (108) fluidgekoppelt ist;
    ein Paar von Elektroden (128) mit einer ersten Elektrode (202) und einer zweiten Elektrode (204);
    einen Stromsensor (120), der so ausgebildet ist, dass er ein erstes Signal erzeugt, das für einen dem Motor (114) zugeführten Strom indikativ ist; und
    einen Kapazitätssensor (124), der so ausgebildet ist, dass er ein zweites Signal erzeugt, das für eine Kapazität zwischen dem Elektrodenpaar (128) indikativ ist,
    wobei die Fluidpumpe (100) so ausgebildet ist, dass sie das erste Signal und das zweite Signal überwacht, und
    wobei die Fluidpumpe (100) so ausgebildet ist, dass sie auf der Grundlage von mindestens einem von dem ersten Signal und dem zweiten Signal gesteuert wird,
    **dadurch gekennzeichnet, dass**:

    der Kapazitätssensor (124) eine Überwachungskammer (126) aufweist, die mit dem Fluidkanal (108) in fluidgekoppelt ist, wobei die Überwachungskammer (126) zumindest teilweise mit Gas gefüllt ist und wobei die Überwachungskammer (126) so ausgebildet ist, dass sie es dem Gas ermöglicht, zumindest teilweise durch das Fluid verdrängt zu werden, das aus dem Fluidkanal (108) in die Überwachungskammer (126) strömt, basierend auf einem Betriebsmodus der Fluidpumpe (100); und
    das Elektrodenpaar (128) mit der Überwachungskammer (126) verbunden ist, wobei das zweite Signal zwischen dem Elektrodenpaar (128) für einen Fluiddruck innerhalb des Fluidkanals (108) indikativ ist.

2. Die Fluidpumpe (100) nach Anspruch 1, wobei der Kapazitätssensor (124) ferner eine Membran (206) aufweist, die mit dem Fluidkanal (108) fluidgekoppelt ist, wobei die Membran (206) so ausgelegt ist, dass sie sich innerhalb der Überwachungskammer (126) auf der Grundlage des Fluiddrucks innerhalb der Membran (206) bewegt.

3. Die Fluidpumpe (100) nach einem der vorhergehenden Ansprüche, wobei das erste Signal für einen Fluidstrom durch den Fluidkanal (108) indikativ ist.

4. Die Fluidpumpe (100) nach einem der vorhergehenden Ansprüche umfasst ferner eine Steuerung (130), die mit jedem von dem Stromsensor (120) und dem Kapazitätssensor (124) kommunizierend verbunden ist, wobei die Steuerung (130) so ausgebildet ist, dass sie Folgendes ausführt:

    Empfangen des ersten Signals vom Stromsensor (120);
    Empfangen des zweiten Signals von dem Kapazitätssensor (124);
    Erkennen des Fluidstroms durch den Fluidkanal (108) auf der Grundlage des empfangenen ersten Signals;
    Erkennen des Fluiddrucks innerhalb des Fluidkanals (108) auf der Grundlage des empfangenen zweiten Signals; und
    Entscheiden über einen Betriebsmodus der Fluidpumpe (100) auf der Grundlage des erkannten Fluidstroms und des erkannten Fluiddrucks.

5. Die Fluidpumpe (100) nach einem der vorhergehenden Ansprüche umfasst ferner ein Umwandlungsmodul (504), das kommunizierend mit dem Kapazitätssensor (124) gekoppelt ist, wobei das Umwandlungsmodul (504) ausgebildet ist, um Folgendes auszuführen:

    Empfangen des zweiten Signals vom Kapazitätssensor (124); und
    Umwandeln des zweiten Signals in ein erstes Frequenzsignal.

6. Die Fluidpumpe (100) nach einem der vorhergehenden Ansprüche, wobei das Erkennen eines Umgebungsdrucks ($P_{ambient}$) innerhalb der Überwachungskammer (126) entweder für einen Trockenlaufmodus oder für einen Speichermodus der Fluidpumpe (100) indikativ ist.

7. Die Fluidpumpe (100) nach Anspruch 6, wobei die zusätzliche Erkennung eines ersten Signals, das nicht Null ist, für den Trockenlaufmodus der Fluidpumpe (100) indikativ ist.

8. Die Die Fluidpumpe (100) nach Anspruch 6, wobei die zusätzliche Erkennung eines ersten Nullsignals für den Speichermodus der Fluidpumpe (100) indikativ ist.

9. Die Fluidpumpe (100) nach einem der vorhergehenden Ansprüche, wobei das Erkennen eines ersten Drucks (P1) innerhalb der Überwachungskammer (126) für einen Niederdruckmodus der Fluidpumpe (100) indikativ ist, wobei der erste Druck (P1) relativ zum Umgebungsdruck ($P_{ambient}$) höher und relativ zu einem Einschaltdruck ($P_{switchon}$) niedriger ist.

10. Die Fluidpumpe (100) nach einem der vorhergehenden Ansprüche, wobei das Erkennen eines zweiten Drucks (P2) innerhalb der Überwachungskammer (126) für einen Hochdruckmodus der Fluidpumpe (100) indikativ ist, wobei der zweite Druck (P2) relativ zum ersten Druck (P1) und relativ zu einem Einschaltdruck ($P_{switchon}$) höher ist.

11. Die Fluidpumpe (100) nach einem der vorhergehenden Ansprüche, wobei das Erkennen eines dritten Drucks (P3) innerhalb der Überwachungskammer (126) für einen Fluidstoppmodus der Fluidpumpe (100) indikativ ist, wobei der dritte Druck (P3) relativ zu jedem des zweiten Drucks (P2) und eines Einschaltdrucks ($P_{switchon}$) höher ist.

12. Die Fluidpumpe (100) nach einem der vorhergehenden Ansprüche, wobei das Erkennen eines Fluidstandes in der Überwachungskammer (126), der ungefähr gleich einer Höhe (H0) der Überwachungskammer (126) ist, für einen Fehlermodus der Fluidpumpe (100) indikativ ist.

13. Die Fluidpumpe (100) nach einem der vorhergehenden Ansprüche umfasst ferner eine Druckanzeige, wobei die Druckanzeige so ausgebildet ist, dass sie eine visuelle Anzeige einer Größe des Fluiddrucks innerhalb des Fluidkanals (108) bereitstellt, und wobei vorzugsweise die Größe des Fluiddrucks innerhalb des Fluidkanals (108) an ein Mobilgerät übertragen wird.

14. Die Fluidpumpe (100) nach einem der vorhergehenden Ansprüche, wobei das erste Signal, das für einen dem Motor (114) zugeführten Strom indikativ ist, automatisch während eines Lernzyklus bestimmt wird, bei dem der Benutzer der Pumpe die Werte der Modi Modus I und Modus II durch freies Fließen der Fluid durch den Fluidkanal (108) und durch Einschränken dieses Flusses durch Schließen eines Ventils am Fluidauslass (106) anlernt.

15. Die Die Fluidpumpe (100) nach einem der vorhergehenden Ansprüche, wobei sich das Elektrodenpaar (128) in den Fluidkanal (108) erstreckt.

**Revendications**

1. Pompe à fluide (100) comprenant :

une entrée de fluide (104) ;
un canal de fluide (108) couplé de manière fluidique à l'entrée de fluide (104) ;
un moteur (114) configuré pour pomper un fluide à travers l'entrée de fluide (104) vers le canal de fluide (108) ;
une sortie de fluide (106) couplée de manière fluidique au canal de fluide (108) ;
une paire d'électrodes (128) comportant une première électrode (202) et une seconde électrode (204) ;
un capteur de courant (120) configuré pour générer un premier signal indicatif d'un courant délivré au moteur (114) ; et
un capteur de capacité (124) configuré pour générer un second signal indicatif d'une capacité entre la paire d'électrodes (128),
dans laquelle la pompe à fluide (100) est configurée pour surveiller le premier signal et le second signal, et
dans laquelle la pompe à fluide (100) est configurée pour être commandée sur la base d'au moins un parmi le premier signal et le second signal,
**caractérisé en ce que** :

le capteur de capacité (124) comprend une chambre de surveillance (126) couplée de manière fluidique au canal de fluide (108), dans laquelle la chambre de surveillance (126) est au moins partiellement remplie de gaz, et dans laquelle la chambre de surveillance (126) est configurée pour permettre au gaz d'être au moins partiellement déplacé par le fluide s'écoulant dans la chambre de surveillance (126) à partir du canal de fluide (108) sur la base d'un mode de fonctionnement de la pompe à fluide (100) ; et

la paire d'électrodes (128) est associée à la chambre de surveillance (126), dans laquelle le second signal entre la paire d'électrodes (128) est indicatif d'une pression de fluide à l'intérieur du canal de fluide (108).

2. Pompe à fluide (100) selon la revendication 1, dans laquelle le capteur de capacité (124) comprend en outre un diaphragme (206) couplé de manière fluidique au canal de fluide (108), le diaphragme (206) étant adapté pour se déplacer dans la chambre de surveillance (126) en fonction de la pression du fluide à l'intérieur du diaphragme (206).

3. Pompe à fluide (100) selon l'une des revendications précédentes, dans laquelle le premier signal est indicatif d'un écoulement de fluide dans le canal de fluide (108).

4. Pompe à fluide (100) selon l'une quelconque des revendications précédentes, comprenant en outre un dispositif de commande (130) couplé de manière communicative à chacun parmi le capteur de courant (120) et le capteur de capacité (124), le dispositif de commande (130) étant configuré pour :

recevoir le premier signal à partir du capteur de courant (120) ;
recevoir le second signal à partir du capteur de capacité (124) ;
reconnaître l'écoulement de fluide à travers le canal de fluide (108) sur la base du premier signal reçu ;
reconnaître la pression de fluide à l'intérieur du canal de fluide (108) sur la base du second signal reçu ; et
décider d'un mode de fonctionnement de la pompe à fluide (100) sur la base de l'écoulement de fluide reconnu et de la pression de fluide reconnue.

5. Pompe à fluide (100) selon l'une quelconque des revendications précédentes, comprenant en outre un module de conversion (504) couplé de manière communicative au capteur de capacité (124), le module de conversion (504) étant configuré pour : recevoir le second signal à partir du capteur de capacité (124) ; et convertir le second signal en un premier signal de fréquence.

6. Pompe à fluide (100) de l'une quelconque des revendications précédentes, dans laquelle la reconnaissance d'une pression ambiante ($P_{ambient}$) à l'intérieur de la chambre de surveillance (126) est indicative d'un parmi un mode de fonctionnement à sec et un mode de stockage de la pompe à fluide (100).

7. Pompe à fluide (100) selon la revendication 6, dans laquelle la reconnaissance supplémentaire d'un premier signal non nul est indicative du mode de fonctionnement à sec de la pompe à fluide (100).

8. Pompe à fluide (100) selon la revendication 6, dans laquelle la reconnaissance supplémentaire d'un premier signal nul est indicative du mode de stockage de la pompe à fluide (100).

9. Pompe à fluide (100) selon l'une quelconque des revendications précédentes, dans laquelle la reconnaissance d'une première pression (P1) dans la chambre de surveillance (126) est indicative d'un mode basse pression de la pompe à fluide (100), la première pression (P1) étant plus élevée par rapport à la pression ambiante ($P_{ambient}$) et plus basse par rapport à une pression de mise en marche ($P_{switchon}$).

10. Pompe à fluide (100) selon l'une quelconque des revendications précédentes, dans laquelle la reconnaissance d'une deuxième pression (P2) dans la chambre de surveillance (126) est indicative d'un mode haute pression de la pompe à fluide (100), avec la deuxième pression (P2) qui est plus élevée par rapport à la première pression (P1) et plus élevée par rapport à une pression de mise en marche ($P_{switchon}$).

11. Pompe à fluide (100) selon l'une quelconque des revendications précédentes, dans laquelle la reconnaissance d'une troisième pression (P3) dans la chambre de surveillance (126) est indicative d'un mode d'arrêt du fluide de la pompe à fluide (100), la troisième pression (P3) étant plus élevée par rapport à la deuxième pression (P2) et à une pression de mise en marche ($P_{switchon}$).

12. Pompe à fluide (100) selon l'une quelconque des revendications précédentes, dans laquelle la reconnaissance d'un niveau de fluide dans la chambre de surveillance (126) approximativement égal à une hauteur (H0) de la chambre de surveillance (126) est indicative d'un mode d'erreur de la pompe à fluide (100).

13. Pompe à fluide (100) selon l'une quelconque des revendications précédentes, comprenant en outre un indicateur de pression, l'indicateur de pression étant configuré pour fournir une indication visuelle d'une grandeur de la pression du fluide à l'intérieur du canal de fluide (108), et où, de préférence, la grandeur de la pression du fluide à l'intérieur du canal de fluide (108) est transmise à un dispositif mobile.

14. Pompe à fluide (100) selon l'une quelconque des revendications précédentes, dans laquelle le premier signal indicatif d'un courant qui est délivré au moteur (114) est automatiquement déterminé pendant un cycle d'apprentissage au cours duquel l'utilisateur de la pompe apprend les valeurs des modes Mode I et Mode II en faisant circuler librement le fluide à travers le canal de fluide (108) et en restreignant ce flux en fermant une vanne à la sortie de fluide (106).

15. Pompe à fluide (100) selon l'une quelconque des revendications précédentes, dans laquelle la paire d'électrodes (128) s'étend dans le canal de fluide (108).

*FIG. 1*

FIG. 2A

FIG. 2B

FIG. 2C

*FIG. 3*

EP 4 004 374 B1

CURRENT DRAWN BY FLUID PUMP V/S FLOW OF FLUID
—— CURRENT (AMPERES)

FIG. 4

502

OPERATIONAL
MODE

302

130

124

504

506

120

*FIG. 5*

DRY RUN MODE / STORAGE MODE

*FIG. 6A*

$P_{SWITCH\ ON} > P1 > P_{AMBIENT}$

LOW PRESSURE MODE

*FIG. 6B*

HIGH PRESSURE MODE

FIG. 6C

FLUID STOP MODE

FIG. 6D

FLUID

FLUID PRESSURE

126

$P_{SWITCH\,ON}$

$H0\,|\,H4$

FLUID PRESSURE

FLUID

$HP$

108

ERROR MODE

FIG. 6E

## REFERENCES CITED IN THE DESCRIPTION

**Patent documents cited in the description**

- US 20110110792 A1